# EUROPÄISCHE PATENTSCHRIFT

(11) **EP 1 647 474 B1**
(45) Veröffentlichungstag und Bekanntmachung des Hinweises auf die Patenterteilung: **01.07.2009**
(21) Anmeldenummer: 05021211.7
(22) Anmeldetag: 28.09.2005
(51) Int. Cl.: B62J 1/00, B62J 1/18, B62J 1/26

(54) **Zweiradsattel**
Two-wheel seat
Selle pour véhicules à deux roues

(30) Priorität: 15.10.2004 DE 202004016000 U
(43) Veröffentlichungstag der Anmeldung: 19.04.2006
(73) Patentinhaber: Büchel GmbH & Co. Fahrzeugteilefabrik KG, 98544 Zelle-Mehlis (DE)
(72) Erfinder: Büchel, Erhard, 36043 Fulda (DE)
(74) Vertreter: Kirschner, Klaus Dieter

(56) Entgegenhaltungen:
- EP-A- 1 281 607
- EP-A- 1 393 650
- EP-A2- 0 903 321
- US-A1- 5 108 076
- US-A1- 5 203 607

## Beschreibung

Die Erfindung betrifft einen Zweiradsattel.

Aus dem Stand der Technik sind Zweiradsattel bekannt, die aus einer Schale, einer darüber angeordnetem elastischen Füllung und einer Satteldecke bestehen.

Aus der EP 0 903 321 B1 ist ein Zweiradsattel bekannt, bei dem ein ornamentales Element auf der Innenseite der Füllung oder zwischen zwei Füllschichten der Füllung angeordnet und durch einen transparent ausgebildeten Bereich der Satteldecke von außen sichtbar ist. Ein solcher Zweiradsattel ist verhältnismäßig schwierig herzustellen. Für das Füllmaterial der Füllschicht muss zwangsläufig ein transparentes Material gewählt werden.

Die EP 1281607 A1 offenbart einen gattungsgemäßen Fahrradsattel, der eine Öffnung mit einem länglichen Profil hat. Die Öffnung liegt im Wesentlichen in dem mittleren Abschnitt der Sitzoberfläche des Sattels und erstreckt sich teilweise zum vorderen Abschnitt des Sattels hin. Die längsgerichtete Öffnung ist mit einem Material bedeckt, das sich von dem Material unterscheidet.

Aus der US-A-5,203,607 ist ein Fahrradsattel bekannt, der eine starre Schale hat, die eine Schaumschicht trägt, die ein thermoplastisches Elastomer mit Wabenmuster hat, die entweder mit der Schaumschicht verbunden oder darin eingebettet ist. Eine Deckschicht überdeckt die Schale, den Schaum und die Polsterschichten. Der Sattel soll eine verbesserte Stoßabsorption und einen erhöhten Fahrkomfort bereitstellen.

Aufgabe der Erfindung ist es, einen solchen Zweiradsattel unter Beibehaltung oder Verbesserung des visuellen Effekts so weiterzubilden, dass er einfacher und kostengünstiger hergestellt werden kann.

Diese Aufgabe wird durch den Sattel nach Anspruch 1 gelöst. Durch die vorliegende Erfindung lassen sich auf einfache Weise vielfache dekorative Effekte mit einfachen Mitteln verwirklichen, weil die Dekorfolie, mit der die dekorativen Effekte erzielt werden, auf einfache Weise in die Satteldecke eingearbeitet werden kann. Ein derartiger Zweiradsattel ist einfacher herzustellen, weil wenigstens eine Schicht eingespart werden kann. Es braucht kein ornamentales Element mehr zwischen der Innenseite der Füllung oder zwischen zwei Füllschichten angeordnet zu werden und zusätzlich dazu ein Teil der Satteldecke transparent ausgebildet zu werden. Ferner können beliebige und insbesondere kostengünstigere Materialien für die Füllung zum Einsatz kommen. Da es Folien mit einer großen Vielzahl von Dekoroberflächen bereits im Handel gibt, kann durch Verwendung einer Folie, bei der die Deckschicht ihrerseits mit einem Oberflächendekor versehen ist, auf der Unterseite der Dekorfolie ohne weiteren Aufwand zusätzliche Dekoreffekte erzielt werden.

Eine vorteilhafte Ausgestaltung der Erfindung ist dadurch gekennzeichnet, dass die Dekorfolie in die Satteldecke eingeschweißt ist, wodurch auf einfache Weise eine glatte Oberfläche der Satteldecke erzielt werden kann, so dass der dekorative Effekt ohne nachteilige Wirkungen beim Einsatz des Sattels zur Folge erzielt wird.

Eine weitere vorteilhafte Ausgestaltung der Erfindung ist dadurch gekennzeichnet, dass die Dekorfolie dreidimensionale Effekte aufweist. Dies macht die Folie besonders dekorativ.

Eine weitere vorteilhafte Ausgestaltung der Erfindung ist dadurch gekennzeichnet, dass die Dekorfolie transparent ist. In diesem Fall wird der dekorative Effekt durch die Oberflächenstruktur der unter der Dekorfolie liegenden Materialien des Sattels beeinflusst oder hauptsächlich erzielt. Die Beschaffenheit, der Zustand sowie ggf. vorhandene Fehler oder Abnutzungserscheinungen der elastischen Füllung lassen sich auf einfache Weise von außen beobachten und kontrollieren.

Eine weitere vorteilhafte Ausgestaltung der Erfindung ist gekennzeichnet durch eine Deckschicht auf der innen liegenden Seite der Dekorfolie. Dadurch treten die dreidimensionalen Effekte besonders deutlich ins Auge. Außerdem können weitere dekorative Effekte unabhängig von dem Material erzielt werden, weil sie unter der Satteldecke vorhanden ist.

Eine weitere vorteilhafte Ausgestaltung der Erfindung ist dadurch gekennzeichnet, dass die Deckfolie eine PVC-, PP- oder PE-Folie ist, wobei derartige Materialien sich besonders für das Verschweißen und die Betriebsverhältnisse bei Zweiradsätteln eignen.

Eine weitere vorteilhafte Ausgestaltung der Erfindung ist dadurch gekennzeichnet, dass die Deckschicht ein Textilmaterial ist, wobei auf einfache Weise die dekorativen Effekte von Textilmaterial ausgenutzt werden können.

Weitere vorteilhafte Ausgestaltungen der Erfindung sind in den Unteransprüchen charakterisiert.

Die Erfindung wird deutlicher durch die nachfolgende ausführliche Beschreibung, wobei die Figuren folgendes zeigen:
Figur 1: zeigt eine perspektivische Ansicht eines erfindungsgemäßen Zweiradsattels mit zwei durch Dekorfolie verschlossenen Öffnungen.
Figur 2: zeigt eine Schnittdarstellung entlang der Linie I-I in Figur 1.
Figur 3: zeigt eine vergrößerte Schnittdarstellung entlang der Linie I-I in Figur 1 durch eine gemäß einem ersten Ausführungsbeispiel der Erfindung ausgebildete Öffnung.
Figur 4: zeigt eine vergrößerte Schnittdarstellung entlang der Linie I-I in Figur 1 durch eine gemäß einem zweiten Ausführungsbeispiel der Erfindung ausgebildete Öffnung.

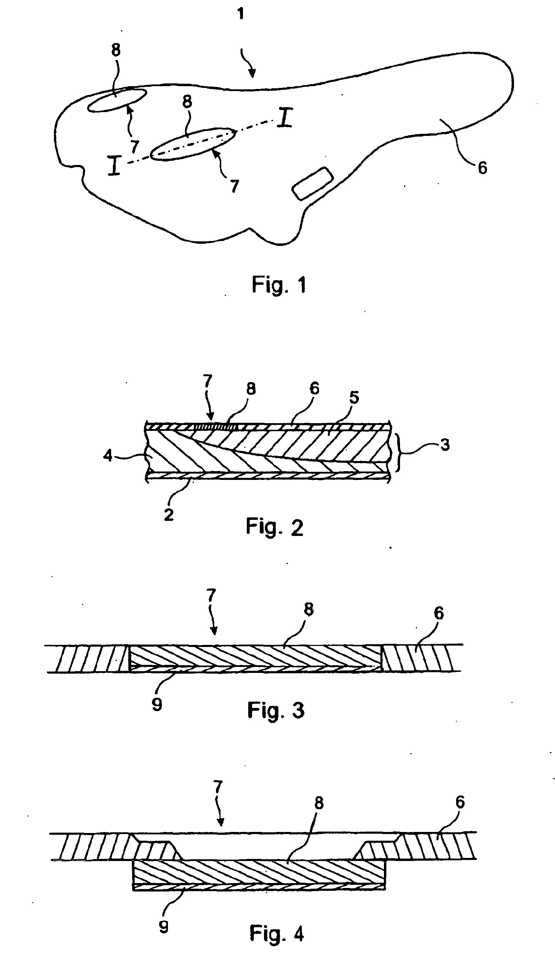

Figur 1 zeigt eine perspektivische Ansicht eines Zweiradsattels 1 mit einer Satteldecke 6 und mit zwei in der Satteldecke 6 ausgebildeten Öffnungen 7.

Diese Öffnungen 7 sind in einem hinteren Bereich der Satteldecke 6 nebeneinander angeordnet, und sie sind durch Dekorfolie 8 verschlossen. Eine Schnittlinie I-I verläuft in Sattelrichtung nach vorne durch die erste der beiden Öffnungen 7 der Satteldecke 6.

Figur 2 zeigt eine Schnittdarstellung durch die erste Öffnung 7 entlang der Linie I-I in Figur 1.

Ganz unten ist die Sattelschale 2 zu sehen, auf welche eine Füllung 3 aufgebracht ist. In den Randbereichen des Zweiradsattels 1 wird die Füllung 3 nur von der Füllschicht 4 gebildet, in dem mittleren Bereich des Zweiradsattels 1 weist die Füllung 3 eine unten liegende Füllschicht 4 und eine auf der Füllschicht 4 angeordnete Gelschicht 5 auf. Zwischen den Randbereichen und dem mittleren Bereich des Zweiradsattels 1 nimmt die Dicke der Gelschicht 5 zum Randbereich hin ab. Dadurch wird bei reduziertem Einsatz des Gelmaterials der Gelschicht 5 eine optimale Polsterung des Zweiradsattels 1 erreicht.

Die Füllschicht 4 und die Gelschicht 5 weisen eine unterschiedliche Elastizität auf. Durch den Verlauf und die Anordnung der Füllschicht 4 und der Gelschicht 5 werden die Eigenschaften der Polsterung des Zweiradsattels 1 bestimmt. Die Polsterung kann individuell an die Erfordernisse, die sich aus der unterschiedlichen Belastung der verschiedenen Bereiche des Zweiradsattels 1 ergeben, angepaßt werden.

Über der Füllung 3 befindet sich die in Figur 2 waagerecht verlaufend dargestellte Satteldecke 6, in der die Öffnung 7 gut zu erkennen ist. In die Öffnung 7 ist passgenau ein Abschnitt von Dekorfolie 8 eingesetzt oder eingeschweisst, der die gleichen Abmessungen wie die Öffnung 7 hat und deren Dicke mit der Schichtdicke der Satteldecke 6 in etwa übereinstimmt. Dementsprechend ist die Öffnung 7 von der Dekorfolie 8 verschlossen.

Je nach Wahl der Dekorfolie 8 lassen sich vielfache visuelle und dekorative Effekte verwirklichen, die besonders attraktiv sind, wenn die Dekorfolie 8 als transparente sog. 3D-Folie ausgebildet ist.

Figur 3 zeigt eine vergrößerte Schnittdarstellung entlang der Linie I-I gemäß einem ersten Ausführungsbeispiel der Erfindung. In den Figuren 3 und 4 ist die Füllschicht 3 nicht dargestellt.

Bei diesem Ausführungsbeispiel der Erfindung ist die Dekorfolie 8 passgenau in die Öffnung 7 der Satteldecke 6 eingebracht und befindet sich auf gleicher Höhe wie die Satteldecke 6.

In der Figur 3 ist gezeigt, dass der seitliche Rand der Dekorfolie 8 passgenau mit dem Rand der Satteldecke 6 abschließt. Alternativ dazu kann der seitliche Rand der Dekorfolie 8 auch mit Rand der Satteldecke 6 verschweißt oder verklebt sein.

Bei dem Ausführungsbeispiel gemäß Figur 3 wird zusätzlich zu den oben beschriebenen Vorteilen eine glatte Oberfläche der Satteldecke 6 erzielt, so daß keine Kanten vorhanden sind, an denen die Hose des Fahrradfahrers reibt und sich abnutzt oder durch die Löcher in die Hose des Fahrradfahrers gerissen werden.

Weiterhin weist die Dekorfolie 8 an ihrer Unterseite eine optionale Deck- bzw. Grundschicht 9 auf, die als Lackschicht, als aufgeschweißte, als aufgeklebte oder anderweitig mit der Dekorfolie 8 verbundene Deckfolie oder Textilmaterial ausgebildet sein kann.

Da die Grundschicht 9 durch die Dekorfolie 8 vor äußeren finflüssen geschützt ist, kann das Material für die Grundschicht 9 aus einer größeren Gruppe von Materialien ausgewählt werden als die Dekorfolie 8. Außerdem ergibt sich bei diesem Ausführungsbeispiel ein geringerer Materialaufwand des ggf. optisch aufwendigen und daher teuren Materials der Grundschicht 9.

Insbesondere kann die Grundschicht 9 aus Textilmaterial sein. Dabei können die Eigenschaften von Textilmaterial ausgenutzt werden.

Figur 4 zeigt eine vergrößerte Schnittdarstellung entlang der Linie 1-1 gemäß einem zweiten Ausführungsbeispiel der Erfindung.

Die Öffnung 7 der Satteldecke 6 weist dabei einen stufenförmig ausgebildeten Rand auf, und die Dekorfolie 8 ist nicht wie in Figur 3 auf gleicher Ebene mit der Satteldecke 6 ausgebildet, sondern sie befindet sich vielmehr unterhalb der Öffnung 7 und ist an der Unterseite der Satteldecke 6 befestigt. Dementsprechend entsteht an der Stelle der Öffnung 7 eine Vertiefung in der Oberfläche des Zweiradsattels 1, wodurch empfindliche Körperteile des Zweiradfahrers entlastet und somit unangenehme und schmerzhafte Druckstellen vermieden werden können.

Die Öffnung 7 der Satteldecke 6 kann gemäß dem in Figur 4 gezeigten Ausführungsbeispiel hergestellt werden, indem die Dekorfolie 8 von unten auf die Satteldecke 6 aufgeschweißt, aufgeklebt oder auflaminiert wird. Der Dekorfolien-Abschnitt 8 braucht dabei nicht wie bei Figur 3 genau die gleichen Abmessungen wie die Öffnung 7 zu haben, sondern weist größere Abmessungen als diese auf.

Durch die stufenförmige Ausgestaltung des Randes der Öffnung 7 ohne scharfe Kanten wird verhindert, dass sich die Hose des Fahrradfahrers übermäßig abnutzt oder Löcher in die Hose des Fahrradfahrers gerissen werden.

Auch bei diesem Ausführungsbeispiel weist die Dekorfolie 8 eine Grundschicht 9 auf, die ebenfalls als Lackschicht, als aufgeschweißte oder anderweitig mit der Dekorfolie 8 verbundene Deckfolie oder als Textilmaterial ausgebildet sein kann.

## Patentansprüche

1. Zweiradsattel (1) mit einer Schale (2), mit einer darüber angeordnetem elastischen Füllung (3) und mit einer Satteldecke (6), wobei
die Satteldecke (6) mindestens eine Öffnung (7) aufweist, die durch eine dekorative Dekorfolie (8) verschlossen ist, und wobei
die elastische Füllung (3) eine Füllschicht (4) und eine zwischen der Füllschicht (4) und der Satteldecke (6) angeordnete Gelschicht (5) aufweist, **gekennzeichnet durch**
eine Deckschicht (9) auf der der elastischen Füllung (3) und der Gelschicht (5) zugewandten Seite der Dekorfolie (8), wobei die Deckschicht (9) ihrerseits mit einem Oberflächendekor versehen ist.

2. Zweiradsattel (1) nach Anspruch 1, **dadurch gekennzeichnet, dass** die Dekorfolie (8) in die Satteldecke (6) eingeschweisst ist.

3. Zweiradsattel (1) nach Anspruch 1 oder 2, **dadurch gekennzeichnet, dass** die Dekorfolie (8) dreidimensionale Effekte aufweist.

4. Zweiradsattel (1) nach Anspruch 3, **dadurch gekennzeichnet, dass** die Dekorfolie transparent ist.

5. Zweiradsattel (1) nach Anspruch 1, **dadurch gekennzeichnet, dass** die Deckschicht (9) der Dekorfolie (8) eine Lackschicht, eine mit der Dekorfolie (8) verbundene Deckfolie, eine PVC-, PP- oder PE-Folie oder ein Textilmaterial ist.

6. Zweiradsattel nach Anspruch 1 oder 5, **dadurch gekennzeichnet, dass** die Dekorfolie (8) durch. Verschweissen mit der Deckfolie (9) verbunden ist.

7. Zweiradsattel (1) nach einem der Ansprüche 1 bis 6, **dadurch gekennzeichnet, dass** die Dekorfolie (8) passgenau in die Öffnung (7) der Satteldecke (6) eingebracht ist und sich auf gleicher Höhe wie die Satteldecke (6) befindet.

8. Zweiradsattel (1) nach einem der Ansprüche 1 bis 7, **dadurch gekennzeichnet, dass** die Dekorfolie (8) unterhalb der Öffnung (7) angeordnet und an der Unterseite der Satteldecke (6) befestigt ist.

9. Zweiradsattel nach Anspruch 8, **dadurch gekennzeichnet, dass** die Öffnung (7) der Satteldecke (6) einen stufenförmig ausgebildeten Rand aufweist.

## Claims

1. A bicycle seat (1), comprising a shell (2), an elastic filling (3) which is arranged lying over the shell, and a seat covering (6), wherein
the seat covering (6) comprised at least one opening (7) which is closed by a decorative pattern foil (8), and wherein
the elastic filling (3) comprises a filling layer (4) and gel layer (5) arranged between the filling layer (4) and the seat covering (6), **characterized by**
a covering layer (9) on the side of the pattern foil (8) facing the elastic filling (3) and the gel layer (5), where the covering layer (9) itself is provided with a surface pattern.

2. A bicycle seat (1) according to claim 1, **characterized in that** the pattern foil (8) is fused into the seat covering (6).

3. A bicycle seat (1) according to claim 1 or 2, **characterized in that** the pattern foil (8) comprises three-dimensional effects.

4. A bicycle seat (1) according to any of the claims 1 to 3, **characterized in that** the pattern foil (8) is transparent.

5. The bicycle seat (1) according to claim 6, **characterized in that** the covering layer (9) of the pattern foil (8) is a varnish layer, a covering foil joined with the pattern foil, is a PVC-, PP- or PE-foil or a textile material.

6. The bicycle seat (1) according to claim 6 or 7, **characterized in that** the pattern foil is joined to the covering foil by fusing.

7. The bicycle seat (1) according to any of the claims 1 to 9, **characterized in that** the pattern foil (8) is inserted accurate in size into the opening (7) of the seat covering (6) and is situated at the same height as the seat covering (6).

8. The bicycle seat (1) according to any of the claims 1 to 9, **characterized in that** the pattern foil (8) is located below the opening (7) and at the lower side of the seat covering (6).

9. The bicycle seat (1) according to claim 11 **characterized in that** the rim of the opening (7) of the seat covering (6) comprises a cascade formed rim.

## Revendications

1. Selle pour véhicule à deux roues (1) munie d'un tapis (2), avec une garniture élastique (3) disposée par-dessus et avec une housse de selle (6), où la housse de selle (6) présente au moins une ouverture (7), qui est fermée par un film décoratif à motif (8), et où la garniture élastique (3) présente une couche de remplissage (4) et une couche de gel (5) disposée entre la couche de remplissage (4) et la housse de selle (6), **caractérisée en ce qu'**un film protecteur (9) se trouve du côté faisant face au film décoratif (8) de la garniture élastique (3) et de la couche de gel (5), où le film protecteur (9) est muni de son côté d'un motif de surface.

2. Selle pour véhicule à deux roues (1) selon revendication 1, **caractérisée en ce que**, le film décoratif (8) est scellé dans la housse de selle (6).

3. Selle pour véhicule à deux roues (1) selon revendication 1 ou 2, **caractérisée en ce que**, le film décoratif (8) présente des effets en trois dimensions.

4. Selle pour véhicule à deux roues (1) selon revendication 3, **caractérisée en ce que**, le film décoratif est transparent.

5. Selle pour véhicule à deux roues (1) selon revendication 1, **caractérisée en ce que**, la couche (9) du film décoratif (8) est un vernis, un film protecteur relié au film décoratif (8), un film PVC, PP ou PE, ou bien un matériau textile.

6. Selle pour véhicule à deux roues selon revendication 1 ou 5, **caractérisée en ce que**, le film décoratif (8) est relié au film protecteur (9) par soudage.

7. Selle pour véhicule à deux roues (1) selon revendication 1 ou 6, **caractérisée en ce que**, le film décoratif (8) est introduit parfaitement dans l'ouverture (7) de la housse de selle (6) et se trouve à la même hauteur que la housse de selle (6).

8. Selle pour véhicule à deux roues (1) selon revendication 1 à 7, **caractérisée en ce que**, le film décoratif (8) est positionné au dessous de l'ouverture (7) et fixé sur la partie inférieure de la housse de selle (6).

9. Selle pour véhicule à deux roues selon revendication 8, **caractérisée en ce que**, l'ouverture (7) de la housse de selle (6) présente une bordure conçue en étages.
